# EUROPEAN PATENT SPECIFICATION

(11) **EP 4 057 828 B1**
(45) Date of publication and mention of the grant of the patent: **22.05.2024**
(21) Application number: 19832997.1
(22) Date of filing: 15.11.2019
(51) Int. Cl.: A23K 20/142, A23K 40/30, A23K 20/158, A23K 20/24, A23K 20/174, A23K 20/189, A23K 20/20, A23K 40/35, A23K 50/10

(54) **RUMEN BY-PASS FEED COMPOSITION**
ZUSAMMENSETZUNG EINES PANSEN BY-PASS FUTTERMITTELS
COMPOSITION DE L'ALIMENT DE DÉRIVATION DU RUMEN

(43) Date of publication of application: 21.09.2022
(73) Proprietor: Cantini, Fernando, 50136 Firenze (IT)
(72) Inventor: Cantini, Fernando, 50136 Firenze (IT)
(74) Representative: Valenza, Silvia
(86) International application number: PCT/IB2019/059821
(87) International publication number: WO 2021/094817

(56) References cited:
- EP-A1- 3 011 839
- JP-A- H03 292 864
- US-A- 4 446 165

## Description

### FIELD OF THE INVENTION

The present invention relates to the field of food compositions for ruminant animals.

### BACKGROUND

As known, one of the main problems in ruminant animals breeding is given by the need to guarantee a balanced food intake to the animal by administering substances with high nutritional value that guarantee a correct growth and, in the case of animals bred for milk production, allow for a quantitatively and qualitatively adequate milk production.

For this purpose, animal feeds are normally supplemented with biologically active substances, for example amino acids and in particular essential amino acids, proteins, vitamins and the like. However, at the level of the animal's rumen, these substances are subject to the microbial degradation typical of ruminant animals, rendering their administration substantially useless, given that their digestion and ruminal decomposition renders the effective use thereof by the animal at the intestine level impossible.

For many years it has been therefore necessary to increase, in diets administered to ruminants, the energy intake and the amount of proteins and amino acids and/or vitamins and/or trace element compounds that are able to by-pass the rumen and to reach the gastrointestinal tract where enzymatic digestion takes place.

To solve the problem of increasing energy intake in feed, it was provided for a certain percentage of animal fats and/or vegetable oils to be added to the diet. However, it was found that the addition of these compounds causes very negative side effects in the rumen, which cancel out any benefit. In particular, it was found that the addition of fats and oils to feed causes a reduction in the degradability of the fiber and an inhibitory action on the activity of ruminal bacteria.

It has long been known that in the rumen the degradation of the fiber increases and the inhibition of the activity of the bacteria decreases when, through the addition of calcium in the diet, a process of saponification of fatty acids takes place, that is when chemical compounds consisting of fatty acids and calcium (calcium soaps) are formed. Starting from these hypotheses, food for ruminant animals containing calcium soaps of palm fatty acids have been developed and placed on the market.

The same effect is also obtained with hydrogenated oils.

With regard instead to the increase in the ruminal by-pass amount of proteins, amino acids, vitamins and/or oligoelements, substantially two methods have thus far been affirmed:
- to increase the by-pass amount of the proteins it was worked on temperatures and times of exposure of said proteins to these temperatures;
- various micro-encapsulation techniques have been developed to increase the by-pass amount of amino acids, vitamins and oligoelements.

The increase in the by-pass amount of proteins due to the temperature and the relative exposure times leads to, as a contraindication, the possible denaturation of a part of the same proteins due to the known Maillard reaction and is therefore a methodology that always involves an intrinsic amount of risk in the process itself. The micro-encapsulation of amino acids, vitamins and oligoelements is instead a very expensive methodology that does not always achieve the desired effects. It may indeed happen that at the digestive level - and therefore in the animal's abomasum and gastrointestinal tract - there is no complete opening of the protective capsule, with the consequent failure by the animal to absorb the compounds contained in the capsule itself. In practice, with micro-encapsulation technologies, nutrients are often efficiently protected at the rumen level but become less available at the level of the subsequent tracts of the gastrointestinal system.

A further problem of micro-encapsulation technologies for the production of food for animals with a high ruminal by-pass value is given by the difficulty of incorporating micro-encapsulated products in the feed since the feed is usually produced with granulation and pelletizing technologies that can break the protective capsule both due to a mechanical effect and due to a pelletizing temperature which is higher than the melting temperature of the protective capsule.

EP3011839A1 discloses the preparation of rumen-protected food comprising a core of soybean-flour onto which biologically active substances are sprayed, where they get adsorbed. The granules are overcoated with a fat blend.

It is therefore evident that food and feed for ruminant animals of known type feature a series of problems which make their use not always optimal.

On the basis of these considerations, the main object of the present invention is that of providing food compositions for ruminant animals which overcome the drawbacks and problems described above by being able to guarantee high ruminal by-pass values for biologically active substances and with high nutritional value in addition to ensuring a complete release in the gastrointestinal tracts following the rumen.

A further object of the present invention is that of providing food compositions for ruminant animals which allow increasing the energy intake provided by the feed to the animal.

Still another object of the present invention is that of providing food compositions for ruminant animals which can be easily used in existing feed pelletizing plants.

The object of the present invention is also that of providing a method for increasing the ruminal by-pass share of proteins, amino acids, vitamins and/or oligoelements.

### SUMMARY OF THE INVENTION

The present invention solves the aforementioned problems by means of a rumen by-pass food composition (50/50a) comprising:
a granule of extraction flour (51) obtained from seeds from which an oil has been extracted;
a lipid mixture (52) of one or more additives intended for animal feeding, said lipid mixture (52) consisting of one or more additives mixed in a lipid substance which is selected from the group consisting of monoglycerides and/or diglycerides and/
or triglycerides of fatty acids from C3 to C12, linseed oil and fish oil and mixtures thereof, said lipid mixture (52) adsorbed in the alveoli of extraction flour to obtain a supplemented granule (53); and
an external pH sensitive rumen by-pass protective matrix (54) with melting temperature higher than or equal to 90 °C, said protective matrix (54) applied externally to the supplemented granule (53), said protective matrix consisting of 11 one or more fatty acids 10-50%
one or more calcium salts of fatty acids 50-90% 11
wherein said fatty acids and corresponding calcium salts are selected from the group consisting of C12:0, C16:0 and C18:0 fatty acids, and in which the % are % by weight referred to the sum of components of said matrix (54).

It has surprisingly been seen that the food compositions for ruminant animals of the present invention have a set of characteristics and properties which allow overcoming the drawbacks and problems described above.

In particular it has been seen that by appropriately inserting (as better described below) animal nutrients, such as proteins, amino acids, vitamins, oligoelements, essential oils, enzymes and the like in food compositions according to the present invention it is possible to obtain food for ruminant animals to be used as:
- source of rumen by-pass plant proteins;
- source of rumen by-pass lipid substances (preferably linseed oil and/or fish oil):
- source of rumen by-pass amino acids;
- source of rumen by-pass vitamins;
- source of rumen by-pass oligoelements;
- source of by-pass essential oils;
- source of by-pass enzymes;
- rumen by-pass energy source.

A further important advantage is given by the fact that the melting temperature of the protective matrix of the present invention is sufficiently high to allow the use thereof in feed pelletizing plants.

Subject of the present invention is also a process for the preparation of a food composition according to any one of the preceding claims, said process comprising:
conveying on a horizontal auger a plurality of granules of extraction flour (51) obtained from seeds from which an oil has been extracted;
mixing a predetermined quantity of one or more additives intended for animal feeding into a lipid substance to obtain a lipid mixture (52) of one or more additives, wherein the lipid substance is selected from the group consisting of monoglycerides and/or diglycerides and/ or triglycerides of fatty acids from C3 to C12, linseed oil and fish oil and mixtures thereof;
in a first section of the auger, spraying the granules of extraction flour (51) with the lipid mixture to obtain a plurality of supplemented granules (53);
in a second section of the auger, subsequent to the first one, spraying a pH sensitive rumen by-pass protective matrix (54) on the supplemented granules (53), to obtain a plurality of supplemented rumen by-pass granules (50a);
cooling the supplemented rumen by-pass granules (50a) to room temperature;
wherein said protective matrix is preheated to a temperature higher than or equal to 90°C and consists of a mixture of:
   one or more fatty acids 10-50%
   one or more calcium salts of fatty acids 50-90%,
   wherein said fatty acids and corresponding calcium salts are selected from the group consisting of C12:0, C16:0 and C18:0 and in which the % are % by weight referred to the sum of components of said matrix (54).

A further subject of the present invention is a feed for ruminant animals comprising a food composition as described above.

A pH sensitive rumen by-pass protective matrix (54) with a melting temperature higher than or equal to 90°C consisting of a mixture of:
one or more fatty acids 10-50%
one or more calcium salts of fatty acids 50-90%
wherein said fatty acids and corresponding calcium salts are selected from the group consisting of C12:0, C16:0 and C18:0 and in which the % are % by weight referred to the sum of components of said matrix (54) is disclosed (not per se forming part of the present invention).

The process according to claim 8 of the present invention involves applying said pH sensitive rumen by-pass protective matrix (54) to a food composition for ruminants, said method comprising heating said protective matrix at a temperature higher than its melting temperature and applying to the food composition to make it rumen by-pass by spraying.

### BRIEF DESCRIPTION OF THE DRAWINGS

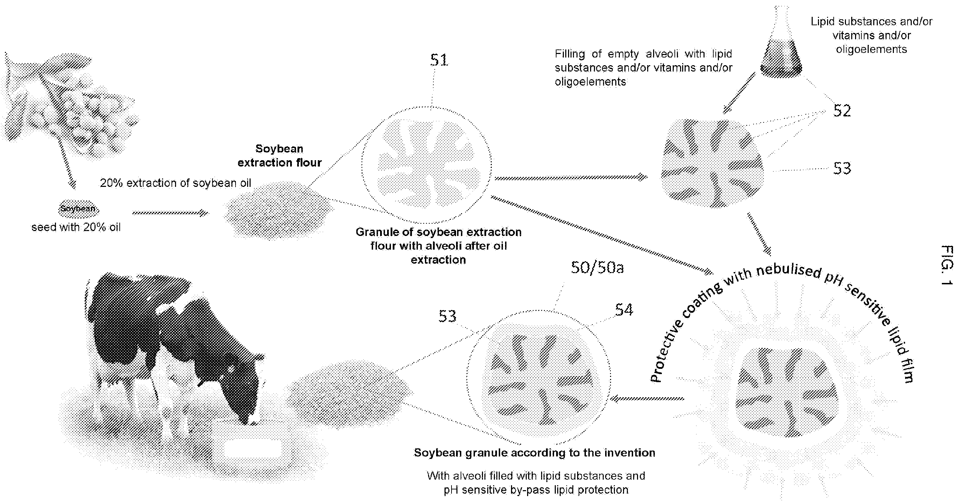

FIG. 1 - shows schematically a food composition according to claim 1 and a process for its preparation according to claim 8.

### DETAILED DESCRIPTION OF THE INVENTION

For the purposes of the present invention, extraction flour means the flour obtained from seeds from which an oil has been extracted. Preferably, said extraction flour is soybean extraction flour that is the by-product of soybean oil extraction. Soybean flours, commonly used for the production of feed, come from the extraction process by pressure and solvents, with a heat treatment of soybeans, giving the flour a high concentration of proteins (+/- 48%). Other extraction flours which can preferably be used for the purposes of the present invention are rapeseed, sunflower and linseed extraction flours. The extraction flour for the purposes of the present invention can also be a mixture of the aforementioned extraction flours.

The lipid base of the mixture (52) of one or more additives consists of a lipid substance selected from the group consisting of monoglycerides and/or diglycerides and/or triglycerides of fatty acids from C3 to C12, linseed oil and fish oil and mixtures thereof. Preferably the lipid base is linseed oil (having a high content of 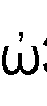 3) and/or fish oil (having a high content of EPA and DHA). If the lipid base is made up of monoglycerides and/or diglycerides and/or triglycerides of fatty acids from C3 to C12, if they have a melting point higher than 20°C, to make up the mixture of additives it will be necessary to heat the lipid base up to its melting temperature. A lipid mixture having a lipid base with a melting point higher than 39°C (ruminal temperature) after being hot-sprayed on the grains of extraction flour, once the extraction flour has cooled, will be in a solid state and will remain solid also at the rumen level thus constituting an additional protective barrier for the additives from the attack of ruminal bacteria.

Feed according to the present invention means any ruminant food, including: complementary feed, complete feed, premixes, supplementary cores, additives. Additives according to the present invention can preferably be amino acids, vitamins, oligoelements, essential oils and enzymes.

For the purposes of the present invention the amino acids are preferably selected from the group consisting of methionine, lysine, choline and histidine.

For the purposes of the present invention the vitamins are preferably selected from the group consisting of vitamin A, vitamin D, vitamin E, vitamin H and vitamin PP.

For the purposes of the present invention the oligoelements are preferably selected from the group consisting of selenium, zinc, copper, iron, manganese and cobalt; said oligoelements preferably in the form of inorganic salts, preferably sulphate salts, or in the form of organic salts, preferably methionine hydroxy analogue salts. For the purposes of the present invention the enzymes are from a source selected from the group consisting of Saccharomyces cerevisiae (SC), Aspergillus oryzae (AO) and Aspergillus niger (AN).

For the purposes of the present invention essential oils are preferably selected from the group consisting of essential oil of thyme, cinnamon, garlic, oregano, rosemary, melaleuca; the extracts of essential oils are also included, preferably cinammic aldehyde, cavracol, lemonene.

An advantageous and innovative feature of the food compositions for ruminant animals according to the present invention is mixing additives intended for animal feeding into the lipid substance with the subsequent introduction of such mixtures into the alveoli of the extraction flour. Thus a first protection of these additives is obtained by the lipid base; a protection which is subsequently doubled by the nebulization of a pH sensitive protective lipid matrix (54) on the grain of extraction flour (53) containing these mixtures.

Preferably according to the present invention the lipid mixture of one or more additives consists of one or more lipid substances in a weight ratio of 1:1-50:1 with respect to the sum of all the additives. Thus for example, in the case in which the additive is DL-Methionine the lipid mixture is preferably prepared by mixing the DL-Methionine in linseed oil and/or fish oil in a 1:1 ratio. In the case of two or three additives the lipid base will preferably be mixed in a weight proportion 1:1 with respect to the sum of the weights of all the additives, so for example if the additives are DL-Methionine, Lysine HCl and choline chloride the lipid mixture of these additives must be made by mixing the total weight of these additives with an equal weight of lipid substance.

An essential and innovative feature of the food compositions for ruminant animals according to the present invention is the pH sensitive composition of the lipid matrix which forms the protective film on the granules of the extraction flour obtained with a mixture of calcium salts of fatty acids and fatty acids according to claim 1. The protective matrix (not per se forming part of the present invention) can be applied to any food composition for ruminants in order to make it rumen by-pass. To be applied to the food composition to be made rumen by-pass, the protective matrix (54) must be heated to a temperature above its melting temperature, preferably to a temperature 10-40°C higher than the melting temperature.

This composition has a high quantity of calcium salts of fatty acids which open in the abomasum when the pH is lowered, thus allowing the proteins of the extraction flour to be attacked and broken down into amino acids and the lipid mixtures of additives contained in the alveoli to be completely freed.

The melting temperature of the protective matrix (54) of the food compositions for ruminant animals according to the present invention is preferably 90-100°C.

In this way, since the melting temperature is higher than that of the animal's rumen (about 40°C), the dissolution of the compositions at the rumen level is avoided, allowing the food compositions of the present invention to maintain their protective effectiveness during the transit and the stay in the ruminal tract of the animal.

A further important advantage is given by the fact that the melting temperature of the protective matrix of the present invention is sufficiently high to allow the use thereof in feed pelletizing plants.

Disclosed but not falling under the scope of the present invention is a food composition consisting of

| | |
|---|---|
| Soybean extraction flour | 76% - 82% |
| pH sensitive protective matrix | 18% - 24% |

where the % are by weight with respect to the total of the composition.

Preferably, according to a preferred embodiment of the present invention the food composition consists of

| | |
|---|---|
| Soybean extraction flour | 60% - 65% |
| Lipid substance | 8% - 10% |
| One or more additives for animal feeding | 8% - 10% |
| pH sensitive protective matrix | 18% - 24% |

where the % are by weight with respect to the total of the composition.

According to the process of the present invention, the extraction flour (preferably soybean), taken from a storage silo, is conveyed onto a horizontal auger that carries it.

According to a first implementation not according to the present invention, in the auger a pH sensitive protective matrix (54), preferably preheated at a temperature of 100-130°C, more preferably at 120°C, is sprayed, in the nebulized form, on the granules (51) of the extraction flour (preferably soybean), which thus forms an external rumen by-pass protective film on the granule. A by-pass protection is thus made for the proteins of the extraction flour (preferably soybean).

According to the process of claim 8 of the invention, in a first section of the auger the premixed lipid substance is sprayed onto the extraction flour (preferably soybean) (51) with the established quantities of additives intended for animal feeding. The sprayed quantity of this lipid mixture (52) of one or more additives is such as to fill the alveoli present in the extraction flour (preferably soybean). These alveoli are present in the granules of the flour and were formed following the previous extraction of the oil (for example and preferably soybean). This is an advantageous step of the present invention in that the premixing of the additives intended for animal feeding with the lipid substance guarantees a first protection of these additives from the attack of the bacteria present in the rumen.

In a second section of the auger, subsequent to the first one, a pH sensitive protective matrix (54), preheated preferably at a temperature of 100-130°C, more preferably at 120°C, is sprayed, in the nebulized form, on the granules (53) of the extraction flour (preferably soybean) exiting from the first section, which thus forms an external rumen by-pass protective film on the granule. A by-pass protection is thus made for the lipid substance and for proteins (preferably soybean) and a double by-pass protection for additives.

The product thus formed then enters a cooling system where, due to the lowering of the temperature to the room temperature, the protective matrix, with a melting temperature between 90 and 100°C, becomes solid, thus obtaining a flowing powder that can be easily bagged.

The food composition obtained in this way can now be used for the preparation of a complete feed.

The present invention can be better understood in the light of the following embodiment examples.

### EXPERIMENTAL PART

### EXAMPLE 1 (not according to the present invention) -

### Preparation of a rumen by-pass soybean extraction flour

The example relates to the preparation of a food composition consisting of soybean extraction flour covered with a pH sensitive lipid matrix to obtain a food composition with a high ruminal by-pass and a high intestinal digestibility.

The food composition consists of
80% of soybean extraction flour,
20% of pH sensitive protective film consisting of
   80% of calcium salts of palmitic acid and
   20% of palmitic acid;
in which the % of the composition are by weight referred to the total weight of the composition and the % of the matrix are by weight referred to the total weight of the components of the matrix.

In a horizontal auger with a diameter of 300 mm, soybean extraction flour is fed at a flow rate of 5 tons/hour.

The pH sensitive lipid matrix, pre-heated to a temperature of 120°C, is sprayed on the soybean extraction flour in such a quantity as to be equal to 20% by weight of the final composition.

The food composition thus obtained is then cooled to room temperature and sent to bagging.

### EXAMPLE 2 - Preparation of a rumen by-pass soybean extraction flour supplemented with linseed oil and DL-Methionine

The example relates to the preparation of a food composition according to the invention consisting of soybean extraction flour supplemented initially with a mixture of linseed oil and DL methionine and subsequently covered with a pH sensitive lipid matrix to obtain a food composition according to the present invention with a high ruminal by-pass and a high intestinal digestibility.

The food composition according to the present embodiment of the invention consists of
64% of soybean extraction flour,
16% of a mixture of linseed oil and DL methionine (in a weight ratio of 1:1 between them)
20% of pH sensitive protective film consisting of
   80% of calcium salts of palmitic acid and
   20% of palmitic acid;
in which the % of the composition are by weight referred to the total weight of the composition and the % of the matrix are by weight referred to the total weight of the components of the matrix.

In a horizontal auger with a diameter of 300 mm, soybean extraction flour is fed at a flow rate of 5 tons/hour.

The mixture of linseed oil and DL Methionine (in a ratio of 1:1 between them) with DL Methionine particles smaller than 3000 microns in a quantity equal to 25% by weight with respect to the soybean extraction flour is sprayed on the soybean extraction flour. The mixture of the two compounds is immediately absorbed on the flour and the DL-Methionine particle size lower than 3000 microns allows an immediate entry into the empty alveoli of the soybean extraction flour together with the linseed oil. In this way a first protection is obtained, by the linseed oil, DL-Methionine from the attack of ruminal bacteria.

At this point, in succession, the pH sensitive lipid matrix pre-heated to 120 °C of temperature in a quantity such as to be equal to 20% by weight of the final composition is sprayed on the supplemented flour.

The food composition thus obtained is then cooled to room temperature and sent to bagging.

### EXAMPLE 3 - Preparation of a rumen by-pass soybean extraction flour supplemented with linseed oil, DL-methionine, Lysine HCl and choline chloride.

The example relates to the preparation of a food composition according to the invention consisting of soybean extraction flour supplemented initially with a mixture of linseed oil, DL-Methionine, Lysine HCl and choline chloride, and subsequently covered with a pH sensitive lipid matrix to obtain a food composition according to the present invention with a high ruminal by-pass and a high intestinal digestibility. The food composition according to the present embodiment of the invention consists of
64% of soybean extraction flour,
16% of a lipid mixture of additives consisting of
   8 parts of linseed oil and
   3 parts of DL-Methionine
   3 parts of Lysine HCl and
   2 parts of choline chloride
20% pH sensitive protective matrix consisting of
   4 parts of calcium salts of lauric acid;
   4 parts of calcium salts of palmitic acid;
   1 part of lauric acid; and
   1 part of palmitic acid.
where the % are by weight with respect to the total weight of the composition and the parts are by weight with respect to the total of the mixture/matrix.

In a horizontal auger with a diameter of 300 mm, soybean extraction flour is fed at a flow rate of 5 tons/hour.

The mixture of linseed and additives (in a ratio of 1:1 between them) with additive particles smaller than 3000 microns in a quantity equal to 25% by weight with respect to the soybean extraction flour is sprayed on the soybean extraction flour. The lipid mixture of the additives is immediately absorbed on the flour and the particle sizes lower than 3000 microns allows an immediate entry into the empty alveoli of the soybean extraction flour together with the linseed oil. Thus, the additives are protected from the attack of ruminal bacteria by means of the linseed oil.

At this point, in succession, the pH sensitive lipid matrix pre-heated to 120 °C of temperature in a quantity such as to be equal to 20% by weight of the final composition is sprayed on the supplemented flour.

The food composition thus obtained is then cooled to room temperature and sent to bagging.

### EXAMPLE 4 - Assessment of the ruminal by-pass portion

In order to assess the protective efficiency from the attack of ruminal bacteria of the compositions according to the present invention, some tests were performed with an "in vitro" technique capable of simulating conditions very close to those of the real rumen.

In particular, this "in vitro" method was developed by Prof. Afro Quarantelli of the Department of Medical Veterinary Sciences of the University of Parma.

### MATERIALS AND METHODS

For assessing the ruminal BY PASS of RUMEN PROTECTED NUTRIENTS it is necessary to have:
A - FILTER BAGS F57 - ANCOM TECNOLOGY
B - no. 2 bottles-fermenters, two litres each, each of which is equipped with special stirrers aimed at simulating the movements of the rumen and modified for the passage of the FILTER BAGS F57.
C - water bath able to guarantee a constant temperature equal to 39°C.
D - a special power station able to operate the stirrers with a speed and with **on-off** times to ensure constant and regular stirring over time. For the assessment of the rumenal BY PASS, the stirring is programmed for 50 seconds ON and for 30 seconds OFF.
E - presence of carbon dioxide source to create anaerobic conditions in the bottles.
F - "standard" unifeed ration formulated for the production of Parmigiano Reggiano cheese. This ration aims at creating the "in vitro" conditions of the breeding dairy cow's rumen.

In application of the provisions of the Van Soest (P.J., 1994. Nutritional Ecology of Ruminants, 2nd edn. Cornell University Press, 476 pp), the creation of a MEDIUM (macro and micro-discrimination solution) and a REDUCING SOLUTION is envisaged.

Both solutions must be prepared immediately before proceeding to individual assessments.

### PROCEDURE

The assessment of the ruminal BY PASS is carried out "DOUBLED" and repeated a "SECOND TIME" after one week. Repetition aims to confirm the results obtained with the first repetition.

All the FILTER BAGS F57 used in the test are numbered in progressive order and weighted empty to determine the "tare".

A sample quantity of approximately 1 gram, weighed with analytical scales, is used for each time. Each weighing is placed in the FILTER BAGS F57 which is sealed with the instrument supplied with the FILTER BAGS F57 - ANCOM TECNOLOGY method.

For each sample, the BY PASS is assessed by the "gravimetric" weight loss of the FILTER BAGS F57 at time 0 (zero) and at times 2, 4, 8, 24 hours.

### ARTIFICIAL RUMEN

The artificial rumen is made with two bottles each of which is equipped with a stirrer. A quantity of unifeed equal to 12 grams, the MEDIUM one, the REDUCING SOLUTION (Van SOEST method) in the measure of 1500 ml is placed inside each bottle. Carbon dioxide is bubbled for about 1 hour and then ruminal liquid equal to a quantity of 650 ml is added.

The ruminal liquid, obtained from no. 3 different rumens at the slaughterhouse adjacent to the laboratory, is placed in a special container in order to maintain a constant temperature (39 °C) and anaerobic conditions.

Each bottle contains the F57 FILTER BAGS containing the rumen protected nutrient sample.

With regard to time 0 (zero), the FILTER BAGS F57 are left in contact with the solution and the ruminal liquid for a maximum time of 3 minutes.

The remaining FILTER BAGS F57 are removed from the bottles after 2, 4, 8 and 24 hours.

All FILTER BAGS F57 are washed with cold water and placed in an isothermal stove, with forced ventilation, for 24 hours (residual dry weight).

Once the FILTER BAGS F57 are dried, they are again weighed with analytical scales to determine the residual weight.

Once the weight of the FILTER BAGS F57 (tare), the quantity of rumen protected residual nutrient after staying in the artificial rumen and drying (residual dry weight) is known, the BY PASS share is calculated and expressed as a percentage.

The results of the *in vitro* by-pass at 8h obtained for the composition according to examples 1-3 are shown in the table below:

| | EXAMPLE 1 | EXAMPLE 2 | EXAMPLE 3 |
|---|---|---|---|
| Raw protein before the test (PG) | 30.16 % | 30.20% * | 30.12 %* |
| Residual proteins not degraded at the end of the test (RUP) | 25.73 % | 25.67 %* | 25.82 % |
| Percentage of residual proteins not degraded with respect to the initial content (RUP/PG) | 85 % | 85 % | 85 % |
| Percentage of methionine by-pass with respect to the initial content (METHIONINE) | | 95 % | 94.3 % |
| Percentage of lysine by-pass with respect to the initial content (LISINE) | | | 93.8 % |
| Percentage of choline by-pass with respect to the initial content (COLINA) | | | 93.5 % |
| Percentage of linseed oil by-pass with respect to the initial content (LINSEED OIL) | | 95 % | 96.2 % |

| | | | |
|---|---|---|---|
| *% of the total composition | | | |

The protective efficacy at ruminal level of the composition according to the present invention is evident from the above data.

## Claims

1. A rumen by-pass food composition (50/50a) comprising:
a granule of extraction flour (51) obtained from seeds from which an oil has been extracted;
a lipid mixture (52) of one or more additives intended for animal feeding, said lipid mixture (52) consisting of one or more additives mixed in a lipid substance which is selected from the group consisting of monoglycerides and/or diglycerides and/or triglycerides of fatty acids from C3 to C12, linseed oil and fish oil and mixtures thereof, said lipid mixture (52) adsorbed in the alveoli of extraction flour to obtain a supplemented granule (53); and
an external pH sensitive rumen by-pass protective matrix (54) with melting temperature higher than or equal to 90 °C, said protective matrix (54) applied externally to the supplemented granule (53), said protective matrix consisting of
one or more fatty acids 10-50%
one or more calcium salts of fatty acids 50-90%
wherein said fatty acids and corresponding calcium salts are selected from the group consisting of C12:0, C16:0 and C18:0 fatty acids, and in which the % are % by weight referred to the sum of components of said matrix (54).

2. The food composition according to claim 1 wherein said one or more additives intended for animal feeding are selected from the group consisting of amino acids, vitamins, oligoelements, essential oils, enzymes.

3. The composition according to claim 2 wherein:
the amino acids are selected from the group consisting of methionine, lysine, choline and histidine;
the vitamins are selected from the group consisting of vitamin A, vitamin D, vitamin E, vitamin H and vitamin PP;
the oligoelements are selected from the group consisting of selenium, zinc, copper, iron, manganese and cobalt;
the enzymes are from
a source selected from the group consisting of Saccharomyces cerevisiae (SC), Aspergillus oryzae (AO) and Aspergillus niger (AN);
the essential oils are selected from the group consisting of essential oil of thyme, cinnamon, garlic, oregano, rosemary and melaleuca.

4. The food composition according to any one of claims 1-3 wherein the lipid mixture of one or more additives consists of one lipid substance and one or more additives in a ratio by weight 1:1-50:1, where the weight of the additives relates to the total weight of the additives.

5. The food composition according to any one of claims 1-4 wherein the protective matrix has a melting temperature of 90-100 °C.

6. The food composition according to any one of claims 1-5 wherein the extraction flour is soybean extraction flour.

7. The food composition according to any one of claims 1-6 consisting of:
Soybean extraction flour 60% - 65%
Lipid substance 8% - 13%
One or more additives for animal feeding 8% - 13%
pH sensitive protective matrix 18% - 24%
where the % are by weight with respect to the total of the composition.

8. A process for the preparation of a food composition according to any one of the preceding claims, said process comprising:
conveying on a horizontal auger a plurality of granules of extraction flour (51) obtained from seeds from which an oil has been extracted;
mixing a predetermined quantity of one or more additives intended for animal feeding into a lipid substance to obtain a lipid mixture (52) of one or more additives, wherein the lipid substance is selected from the group consisting of monoglycerides and/or diglycerides and/or triglycerides of fatty acids from C3 to C12, linseed oil and fish oil and mixtures thereof;
in a first section of the auger, spraying the granules of extraction flour (51) with the lipid mixture to obtain a plurality of supplemented granules (53);
in a second section of the auger, subsequent to the first one, spraying a pH sensitive rumen by-pass protective matrix (54) on the supplemented granules (53), to obtain a plurality of supplemented rumen by-pass granules (50a);
cooling the supplemented rumen by-pass granules (50a) to room temperature;
wherein said protective matrix is preheated to a temperature higher than or equal to 90°C and consists of a mixture of:
one or more fatty acids 10-50%
one or more calcium salts of fatty acids 50-90%
wherein said fatty acids and corresponding calcium salts are selected from the group consisting of C12:0, C16:0 and C18:0 and in which the % are % by weight referred to the sum of components of said matrix (54).

9. The process according to claim 8 wherein the protective matrix is preheated to a temperature of 100-130°C.

10. A feed for ruminant animals comprising the food composition according to claims 1-7.

11. A use of a food composition according to any one of claims 1-7 for the preparation of a feed for ruminant animals.

## Patentansprüche

1. Pansen-Bypass-Nahrungsmittelzusammensetzung (50/50a), umfassend:
ein Granulat aus Extraktionsmehl (51), das aus Samen gewonnen wurde, aus denen ein Öl extrahiert wurde;
eine Lipidmischung (52) aus einem oder mehreren Zusatzstoffen, die für die Tierernährung bestimmt sind, wobei die Lipidmischung (52) aus einem oder mehreren Zusatzstoffen besteht, die in einer Lipidsubstanz gemischt sind, die aus der Gruppe ausgewählt ist, die aus Monoglyceriden und/oder Diglyceriden und/oder Triglyceriden von Fettsäuren von C3 bis C12, Leinöl und Fischöl und Mischungen davon besteht, wobei die Lipidmischung (52) in den Alveolen von Extraktionsmehl adsorbiert ist, um ein supplementiertes Granulat (53) zu erhalten; und
eine externe pH-sensitive Pansen-Bypass-Schutzmatrix (54) mit einer Schmelztemperatur von größer oder gleich 90 °C, wobei die Schutzmatrix (54) extern auf das supplementierte Granulat (53) aufgebracht ist, wobei die Schutzmatrix aus einer oder mehreren Fettsäuren 10-50%
einem oder mehreren Calciumsalzen von Fettsäuren 50-90% besteht,
wobei die Fettsäuren und die entsprechenden Calciumsalze aus der Gruppe ausgewählt sind, die aus C12:0-, C16:0- und C18:0-Fettsäuren besteht, und wobei die % Gew.- % bezogen auf die Summe der Komponenten der Matrix (54) sind.

2. Nahrungsmittelzusammensetzung nach Anspruch 1, wobei der eine oder die mehreren Zusatzstoffe, die für die Tierernährung bestimmt sind, aus der Gruppe ausgewählt sind, die aus Aminosäuren, Vitaminen, Oligoelementen, ätherischen Ölen, Enzymen besteht.

3. Zusammensetzung nach Anspruch 2, wobei:
die Aminosäuren aus der Gruppe bestehend aus Methionin, Lysin, Cholin und Histidin ausgewählt sind;
die Vitamine aus der Gruppe bestehend aus Vitamin A, Vitamin D, Vitamin E, Vitamin H und Vitamin PP ausgewählt sind;
die Oligoelemente aus der Gruppe bestehend aus Selen, Zink, Kupfer, Eisen, Mangan und Kobalt ausgewählt sind;
die Enzyme aus einer Quelle ausgewählt aus der Gruppe bestehend aus Saccharomyces cerevisiae (SC), Aspergillus oryzae (AO) und Aspergillus niger (AN) stammen;
die ätherischen Öle aus der Gruppe bestehend aus ätherischen Ölen von Thymian, Zimt, Knoblauch, Oregano, Rosmarin und Melaleuca ausgewählt sind.

4. Nahrungsmittelzusammensetzung nach einem der Ansprüche 1-3, wobei die Lipidmischung aus einem oder mehreren Zusatzstoffen aus einer Lipidsubstanz und einem oder mehreren Zusatzstoffen in einem Gewichtsverhältnis von 1:1-50:1 besteht, wobei sich das Gewicht der Zusatzstoffe auf das Gesamtgewicht der Zusatzstoffe bezieht.

5. Nahrungsmittelzusammensetzung nach einem der Ansprüche 1-4, wobei die Schutzmatrix eine Schmelztemperatur von 90-100 °C aufweist.

6. Nahrungsmittelzusammensetzung nach einem der Ansprüche 1-5, wobei das Extraktionsmehl Sojabohnenextraktionsmehl ist.

7. Nahrungsmittelzusammensetzung nach einem der Ansprüche 1-6, bestehend aus: Sojabohnen-Extraktionsmehl 60% - 65%
Lipidsubstanz 8% - 13%
Einem oder mehreren Zusatzstoffen für die Tierernährung 8% - 13% pH-empfindlicher Schutzmatrix 18% - 24%
wobei die % Gew.- % in Bezug auf die Summe der Zusammensetzung sind.

8. Verfahren zur Herstellung einer Nahrungsmittelzusammensetzung nach einem der vorhergehenden Ansprüche, wobei das Verfahren umfasst:
Fördern einer Vielzahl von Granulaten von Extraktionsmehl (51), das aus Samen erhalten wurde, aus denen ein Öl extrahiert wurde, auf einer horizontalen Schnecke;
Mischen einer vorbestimmten Menge eines oder mehrerer Zusatzstoffe, die für die Tierernährung bestimmt sind, in eine Lipidsubstanz, um eine Lipidmischung (52) aus einem oder mehreren Zusatzstoffen zu erhalten, wobei die Lipidsubstanz aus der Gruppe ausgewählt ist, die aus Monoglyceriden und/oder Diglyceriden und/oder Triglyceriden von Fettsäuren von C3 bis C12, Leinöl und
Fischöl und Mischungen davon besteht;
in einem ersten Abschnitt der Schnecke Besprühen der Granulate des Extraktionsmehls (51) mit der Lipidmischung, um eine Vielzahl von supplementierten Granulaten (53) zu erhalten;
in einem zweiten Abschnitt der Schnecke, im Anschluss an den ersten, Sprühen einer pH-sensitiven Pansen-Bypass-Schutzmatrix (54) auf die supplementierten Granulate (53), um eine Vielzahl von supplementierten Pansen-Bypass-Granulaten (50a) zu erhalten;
Abkühlen der supplementierten Pansen-Bypass-Granulate (50a) auf Raumtemperatur;
wobei die Schutzmatrix auf eine Temperatur von mehr als oder gleich 90 °C vorgewärmt wird und aus einer Mischung besteht aus:
einer oder mehreren Fettsäuren 10-50%
einem oder mehreren Calciumsalzen von Fettsäuren 50-90%,
wobei die Fettsäuren und entsprechenden Calciumsalze aus der Gruppe ausgewählt sind, die aus C12:0, C16:0 und C18:0 besteht, und wobei die % Gew.-% auf die Summe der Komponenten der Matrix (54) bezogen sind.

9. Verfahren nach Anspruch 8, wobei die Schutzmatrix auf eine Temperatur von 100-130 °C vorgewärmt wird.

10. Futtermittel für Wiederkäuer, umfassend die Nahrungsmittelzusammensetzung nach den Ansprüchen 1-7

11. Verwendung einer Nahrungsmittelzusammensetzung nach einem der Ansprüche 1-7 zur Herstellung eines Futtermittels für Wiederkäuer.

## Revendications

1. Composition alimentaire de dérivation du rumen (50/50a) comprenant :
un granulé de farine d'extraction (51) obtenu à partir de graines dont une huile a été extraite ;
un mélange lipidique (52) d'un ou de plusieurs additifs destinés à l'alimentation animale, ledit mélange lipidique (52) étant constitué d'un ou plusieurs additifs mélangés à une substance lipidique qui est sélectionnée dans le groupe constitué par les monoglycérides et/ou les diglycérides et/ou les triglycérides d'acides gras de C3 à C12, l'huile de graines de lin et l'huile de poisson et leurs mélanges, ledit mélange lipidique (52) étant adsorbé dans les alvéoles de la farine d'extraction afin d'obtenir un granulé supplémenté (53) ; et
une matrice protectrice externe (54) de dérivation du rumen sensible au pH avec une température de fusion supérieure ou égale à 90 °C, ladite matrice protectrice (54) étant appliquée à l'extérieur du granulé supplémenté (53), ladite matrice protectrice étant constituée d'un ou de plusieurs acides gras 10 à 50 % un ou plusieurs sels de calcium d'acides gras 50 à 90 %
dans laquelle lesdits acides gras et les sels de calcium correspondants sont sélectionnés dans le groupe constitué par les acides gras C12:0, C16:0 et C18:0, et dans laquelle les % sont des % en poids par rapport à la somme des composants de ladite matrice (54).

2. Composition alimentaire selon la revendication 1 dans laquelle lesdits un ou plusieurs additifs destinés à l'alimentation animale sont sélectionnés dans le groupe constitué par les acides aminés, les vitamines, les oligoéléments, les huiles essentielles et les enzymes.

3. Composition selon la revendication 2 dans laquelle :
les acides aminés sont sélectionnés dans le groupe constitué par la méthionine, la lysine, la choline et l'histidine ;
les vitamines sont sélectionnées dans le groupe constitué par la vitamine A, la vitamine D, la vitamine E, la vitamine H et la vitamine PP ;
les oligoéléments sont sélectionnés dans le groupe constitué par le sélénium, le zinc, le cuivre, le fer, le manganèse et le cobalt ;
les enzymes proviennent d'une source sélectionnée dans le groupe constitué par le Saccharomyces cerevisiae (SC), l'Aspergillus oryzae (AO) et l'Aspergillus niger (AN) ;
les huiles essentielles sont sélectionnées dans le groupe constitué par les huiles essentielles de thym, de cannelle, d'ail, d'origan, de romarin et de mélaleuque.

4. Composition alimentaire selon l'une quelconque des revendications 1 à 3 dans laquelle le mélange lipidique d'un ou de plusieurs additifs est constitué d'une substance lipidique et d'un ou de plusieurs additifs dans un rapport en poids de 1:1 à 50:1, où le poids des additifs se rapporte au poids total des additifs.

5. Composition alimentaire selon l'une quelconque des revendications 1 à 4 dans laquelle la matrice protectrice a une température de fusion de 90 à 100 °C.

6. Composition alimentaire selon l'une quelconque des revendications 1 à 5 dans laquelle la farine d'extraction est une farine d'extraction de soja.

7. Composition alimentaire selon l'une quelconque des revendications 1 à 6 constituée de : Farine d'extraction de soja 60 % à 65 %
Substance lipidique 8 % à 13 %
Un ou plusieurs additifs pour l'alimentation animale 8 % à 13 %
Matrice protectrice sensible au pH 18 % à 24 %
où les % sont en poids par rapport au total de la composition.

8. Procédé de préparation d'une composition alimentaire selon l'une quelconque des revendications précédentes, ledit procédé comprenant :
transporter sur une vis sans fin horizontale une pluralité de granulés de farine d'extraction (51) obtenus à partir de graines dont une huile a été extraite ;
mélanger une quantité prédéterminée d'un ou de plusieurs additifs destinés à l'alimentation animale dans une substance lipidique pour obtenir un mélange lipidique (52) d'un ou de plusieurs additifs, dans lequel la substance lipidique est sélectionnée dans le groupe constitué par les monoglycérides et/ou les diglycérides et/ou les triglycérides d'acides gras de C3 à C12, l'huile de graines de lin et
l'huile de poisson et leurs mélanges ;
dans une première section de la vis sans fin, pulvériser les granulés de farine d'extraction (51) avec le mélange lipidique pour obtenir une pluralité de granulés supplémentés (53) ;
dans une deuxième section de la vis sans fin, successive à la première, pulvériser une matrice protectrice (54) de dérivation du rumen sensible au pH sur les granulés supplémentés (53) pour obtenir une pluralité de granulés de dérivation du rumen supplémentés (50a) ;
refroidir les granulés de dérivation du rumen supplémentés (50a) à la température ambiante ;
dans lequel ladite matrice protectrice est préchauffée à une température supérieure ou égale à 90 °C et est constituée d'un mélange de :
un ou plusieurs acides gras 10 à 50 %
un ou plusieurs sels de calcium d'acides gras 50 à 90 %
dans lequel lesdits acides gras et les sels de calcium correspondants sont sélectionnés dans le groupe constitué par C12:0, C16:0 et C18:0 et dans lequel les % sont des % en poids par rapport à la somme des composants de ladite matrice (54).

9. Procédé selon la revendication 8 dans lequel la matrice protectrice est préchauffée à une température de 100 à 130 °C.

10. Aliment pour animaux ruminants comprenant la composition alimentaire selon les revendications 1 à 7.

11. Utilisation d'une composition alimentaire selon l'une quelconque des revendications 1 à 7 pour la préparation d'un aliment pour animaux ruminants.
